# EUROPÄISCHE PATENTSCHRIFT

(11) **EP 1 347 114 B1**
(45) Veröffentlichungstag und Bekanntmachung des Hinweises auf die Patenterteilung: **11.11.2015**
(21) Anmeldenummer: 03005045.4
(22) Anmeldetag: 06.03.2003
(51) Int. Cl.: E04C 5/07, B29C 70/52

(54) **Bewehrungsstab für den Betonbau und Verfahren zur Herstellung von Bewehrungsstäben**
Reinforcing bar for concrete constructions and method for the production of such bars
Barre d'armature pour constructions en béton et procédé pour la production de telles barres

(30) Priorität: 23.03.2002 DE 10213153
(43) Veröffentlichungstag der Anmeldung: 24.09.2003
(73) Patentinhaber: SCHÖCK BAUTEILE GmbH, 76534 Baden-Baden (DE)
(72) Erfinder: Weber, André, 77185 Bühl (DE)
(74) Vertreter: Lemcke, Brommer & Partner Patentanwälte Partnerschaft mbB

(56) Entgegenhaltungen:
- DE-A- 3 145 153
- DE-A- 3 839 835
- DE-A- 4 302 409
- DE-A- 19 625 426
- DE-A- 19 917 126
- GB-A- 2 282 096
- US-A- 4 938 823
- US-A- 5 626 700
- US-A- 5 632 837

## Beschreibung

Die Erfindung betrifft einen Bewehrungsstab für den Betonbau bestehend aus einem faserverstärkten Kunststoffprofil, das durch Pultrusion hergestellt ist.

Es gibt immer wieder Versuche, die üblicherweise aus Metall hergestellten Bewehrungsstäbe durch Kunststoffbewehrungsstäbe zu ersetzen, da diese - bei vergleichbaren Eigenschaften - zum einen sehr kostengünstig herzustellen sind und zum anderen sehr hohe Wärmedämmeigenschaften aufweisen, die sogar über denjenigen von Edelstahl liegen.

Als ein erfolgreiches Herstellungsverfahren für Kunststoffbewehrungsstäbe hat sich Pultrusion erwiesen. Dabei werden grundsätzlich zwei Verfahren unterschieden, nämlich zum einen das offene Verfahren, bei dem endlose Faserstränge unter Umgebungsdruck mit einem in der Regel duroplastischen Harz imprägniert werden, und das Injektionsverfahren, bei dem das Harz unter erhöhtem Druck in einem Werkzeug auf die endlosen Faserstränge trifft. Beiden Verfahren gemeinsam ist die anschließende Aushärtung in einem formgebenden Werkzeug, welches beheizt ist und eine der gewünschten Endkontur entsprechende Form besitzt. Ein bekanntes Problem beim Pultrusionsverfahren ist die Beschränkung der Pultrusionsgeschwindigkeit aufgrund der Düsenreibung und die beschränkte Aushärtungsgeschwindigkeit des Kunststoffmaterials. Dabei sind die einzelnen Parameter derart miteinander verbunden, dass zwar mit einer längeren Düse die Pultrusionsgeschwindigkeit aufgrund der konstanten Zeit der Aushärtung theoretisch erhöht werden kann, dass praktisch jedoch die längere Düse mehr Reibung erzeugt, welche den gesamten Prozess wiederum verlangsamt.

Es ist außerdem im Stand der Technik aus der US-A 5626700 ein Pultrusionsverfahren bekannt, bei dem die Formgebung und Aushärtung nicht in einem - wie oben erwähnten - beheizten Werkzeug erfolgt, sondern unter Verwendung von umlaufenden Metallbändern, die durch teuere und aufwendige Metallumformmaschinen hergestellt werden und deren Länge die Aushärtungsstrecke vorgeben, wodurch die Herstellung nur mit einer deutlich reduzierten Geschwindigkeit erfolgen kann.

Ein Bewehrungsstab nach dem Oberbegriff des Anspruchs 1 wird in der DE 199 17 126 A beschrieben.

Hiervon ausgehend liegt der vorliegenden Erfindung die Aufgabe zugrunde, einen Bewehrungsstab aus einem durch Pultrusion hergestellten Kunststoffprofil zur Verfügung zu stellen, der sich durch ein verbessertes und insbesondere schnelleres Herstellungsverfahren auszeichnet.

Diese Aufgabe wird erfindungsgemäß dadurch gelöst, dass der Bewehrungsstab während des Pultrusionsverfahrens unter Verwendung einer aus Kunststoff bestehenden, formgebenden verlorenen Schalung hergestellt ist. Eine solche Schalung ist sehr einfach und kostengünstig herzustellen und kann problemlos über längere Zeit während des Herstellungsverfahrens am Kunststoffprofil verbleiben, um so die Produktionsschritte Formgebung und Aushärtung zeitlich und örtlich voneinander trennen zu können. Hierdurch lässt sich die bisher immer kritische Aushärtungsgeschwindigkeit als Einflussgröße auf das gesamte Pultrusionsverfahren ausklammern, da die Aushärtung unabhängig von der Pultruison bzw. Formgebung erfolgt und somit den vorgelagerten Formgebungsprozess nicht beeinflusst oder gar bremst.

Der wesentliche Vorteil einer aus Kunststoff hergestellten formgebenden Schalung besteht in der einfachen Herstellbarkeit und Formgebung: So kann die Schalung beispielsweise durch Extrusion hergestellt werden, wodurch beliebige Querschnitte und beliebige Oberflächenstrukturen erzeugbar sind. Diese Schalung wird dann im Pultrusionsverfahren mit Harz und Fasersträngen gefüllt und in einem anschließenden Schritt ohne Reibung und Längenbeschränkung in einem Ofen ausgehärtet, welcher kontinuierlich in die Pultrusionslinie integriert sein oder im Batchbetrieb betrieben werden kann.

Ein besonderer Vorteil der Schalung kommt dadurch zum Tragen, dass die verlorene Schalung am Profil verbleiben kann, um beispielsweise eine Schutzfunktion gegen bestimmte Medien oder Strahlung auszuüben. Erst durch eine solche Schutzschicht lassen sich die Kunststoffprofile als Bewehrungsstäbe auch dort einsetzen, wo bisher Metall und insbesondere Edelstahl aufgrund ihrer Korrosionsbeständigkeit bevorzugt wurden.

Um die Kunststoffschalung während des Pultrusionsverfahrens verfüllen zu können, ist zum einen möglich, diese durch Koextrusion in der Pultrusionsvorrichtung selbst herzustellen und mit Harz- und Fasersträngen zu füllen; oder die Schalung wird mit einem geeigneten Längsverschluss hergestellt - beispielsweise bestehend aus zwei sich überlappenden Halbschalen, die über Klebungen, Schweißungen, Klippverbindungen oder dergleichen aneinander festgelegt werden können, nachdem sie mit dem Harz von den Fasersträngen gefüllt worden sind. Der Vorteil einer mit geeignetem Längsverschluss hergestellten Schalung besteht darin, dass die gesamte Vorrichtung einfacher aufgebaut und die Schalung in fertigem oder halbfertigem Zustand der Pultrusionsvorrichtung zugeführt werden kann. Im Gegensatz dazu bedeutet Koextrusion, dass der Extruder um die Pultrusionsvorrichtung herumgebaut und an geeigneter Stelle über die Faserstränge bzw. das Matrixmaterial die extrudierte Schalung gelegt werden muss.

Wie bereits weiter oben erwähnt, besitzt die Kunststoffschalung den wesentlichen Vorteil, dass sie profiliert ausgebildet sein kann, beispielsweise, um das Kunststoffprofil und insbesondere den Bewehrungsstab mit Rippen oder ähnlichen Oberflächenstrukturen zu versehen, die sich auch quer zur Extrusionsrichtung erstrecken können, um das Pultrudat mit einer strukturierten Außenhülle zu versehen.

Die erfindungsgemäße Verwendung einer Kunststoffschalung hat den weiteren Vorteil darin, dass das noch mit der Schalung versehene Kunststoffprofil vor seinem Aushärten in der jeweils gewünschten Art und Weise deformiert oder gebogen werden kann, was bei den durch das übliche Pultrusionsverfahren hergestellten Kunststoffprofilen nicht möglich ist.

Schließlich empfiehlt es sich, dass die Kunststoffschalung aus einem Thermoplast besteht, wobei die Schalung so dimensioniert sein sollte, dass sie zumindest vor dem Aushärten ihr Eigengewicht tragen kann.

Ein wichtiger Aspekt des vorliegenden faserverstärkten Kunststoffprofils besteht darin, dass es unter Verwendung von Endlosfasern hergestellt wird, die aufgrund ihrer großen Länge verglichen mit der Länge des Bewehrungsstabs dazu in der Lage sind, die Zugbelastung des Bewehrungsstabs aufzunehmen und weiterzugeben. Bei Kunststoffprofilen mit Kurzfasern ist eine Zugkraftübertragung, wie es für den Einsatz als Bewehrungsstab erforderlich ist, in der Regel nicht möglich.

Bezüglich des Aufbaus des erfindungsgemäßen Bewehrungsstabes ist es außerdem erfindungswesentlich, dass der Querschnitt des Bewehrungsstabs zu einem überwiegenden Teil aus dem inneren faserverstärkten Kunststoff und zu einem geringen Teil aus der den Kunststoff umgebenden äußeren Schalung besteht. In der Regel wird diese Schalung eine sehr geringe Dicke aufweisen, die gerade mal so dick ausfällt, dass die Schalung die gewünschte Eigenstabilität aufweist und damit die beabsichtigte Formgebung erzielen kann.

Neben dem so hergestellten Bewehrungsstab erstreckt sich die vorliegende Erfindung aber auch auf das Verfahren zur Herstellung von Bewehrungsstäben für den Betonbau aus faserverstärkten Kunststoffprofilen. Dieses erfindungsgemäße Pultrusionsverfahren zeichnet sich dadurch aus, dass das Kunststoffprofil durch Pultrusion unter Verwendung einer aus Kunststoff bestehenden, formgebenden verlorenen Schalung hergestellt ist.

Bezüglich des Pultrusionsverfahrens selbst empfehlen sich ebenfalls die vorstehend geschilderten bevorzugten Ausführungsformen wie Herstellung der Schalung durch Extrusion, Verbleiben der Schalung am Kunststoffprofil auch noch nach dem Aushärten, Aushärten des Kunststoffprofils zusammen mit seiner Schalung in einem Ofen, Ausbilden der Schalung in profilierter Form, etc.

Besonderes Augenmerk sei darauf gerichtet, dass bezüglich der erwähnten frei wählbaren Querschnitte und Oberflächenstrukturen zu berücksichtigen ist, dass nicht nur ein Kunststoffprofil in Form von zylindrischen Bewehrungsstäben - mit üblicherweise kreisförmigem Querschnitt -, sondern auch (fast) jede beliebige andere Form hergestellt werden kann, wie beispielsweise ein Bewehrungselement in Form eines Doppel-T-Trägers, ein Bewehrungselement aus Rohrmaterial, etc.

Weitere Merkmale und Vorteile der vorliegenden Erfindung ergeben sich aus der nachfolgenden Beschreibung von Ausführungsbeispielen anhand der Zeichnung; hierbei zeigen
- Figur 1: das erfindungsgemäße Pultrusionsverfahren im schematischen Ablauf;
- Figur 2: einen Radialschnitt durch verschiedene Ausführungsformen einer Kunststoffschalung;
- Figur 3: einen Radialschnitt durch erfindungsgemäß mittels Kunststoffschalung hergestellte Bewehrungselemente; und
- Figur 4: Oberflächenprofile einer erfindungsgemäßen Kunststoffschalung.

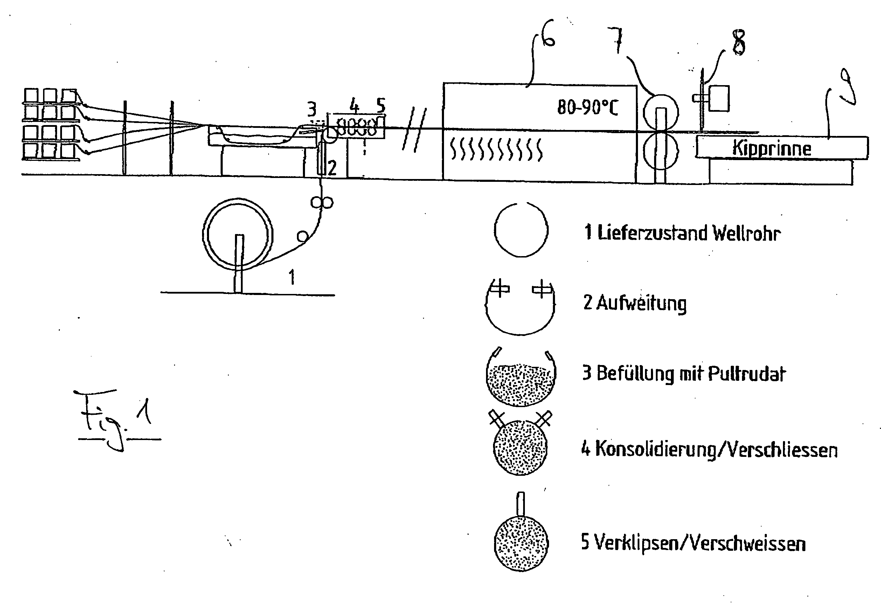

In Figur 1 ist in schematischer Art und Weise der Ablauf eines Herstellungsverfahrens für Bewehrungsstäbe gezeigt. Die Bewehrungsstäbe werden in dieser Anmeldung als ein wesentliches Anwendungsgebiet der Kunststoffprofile beispielhaft näher beschrieben. Bei Position 1 wird das Material der Schalung von einer Trommel abgerollt und in Richtung der Pultrusionsvorrichtung befördert, wo es vor dem Zuführen in die Pultrusionsvorrichtung von der üblicherweise fast geschlossenen Rohrform aufgeweitet wird (Position 2), bei Position 3 mit dem Pultrudat befüllt wird, in Position 4 die aufgeweiteten Enden wieder zurückgeführt werden und in Posi-tion 5 die Schalung dauerhaft verschlossen wird. Anschließend wird es bei 80° C bis 90° C durch einen Ofen 6 befördert, wo das Pultrudat aushärtet. In dem ausgehärteten Zustand wird dann das endlose Bewehrungsstabmaterial über einen Antrieb 7 zu einer Säge 8 befördert, wo es auf das gewünschte Längenmaß abgeschnitten bzw. vereinzelt wird und über eine Kipprinne 9 der weiteren Verarbeitung, Stapelung, Verpackung etc. zugeführt wird.

Es ist aus Figur 1 leicht erkennbar, dass der Ofen 6 getrennt vom restlichen Pultrusionsverfahren aufgestellt ist und somit den Pultrusionsprozess auch nicht beeinträchtigt, anders als dies bei den bekannten Pultrusionsverfahren der Fall ist.

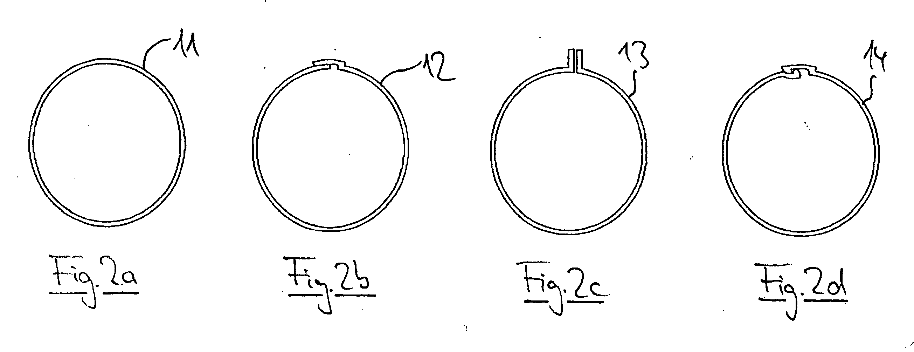

In Figur 2 sind verschiedene Querschnitte durch eine erfindungsgemäße Schalung dargestellt: Figur 2a zeigt eine nahtlose Schalung 11, hergestellt in der Pultrusionsvorrichtung selbst durch Koextrusion, wobei dann nach dem Verlassen des Pultrusionswerkzeugs nicht nur das Pultrudat aushärten muss, sondern auch die Schalung.

Figur 2b zeigt eine Schalung 12 mit sich überlappenden Enden, wobei die Enden durch das Pultrudat selbst verklebt und aneinander festgelegt werden, wobei aber auch die Enden durch ein längs verlaufendes Klebeband, durch eine Schweißverbindung, etc. mit zusätzlichen Mitteln verbunden werden können.

In Figur 2c sind die aneinander festzulegenden Enden einer Schalung 13 in Form einer radial abstehenden Flanschverbindung ausgebildet, die jedoch ähnlich der Variante aus Figur 2b mit den dort geschilderten Verfahren hergestellt werden kann.

Schließlich zeigt Figur 2d eine Schnapp- bzw. Rastverbindung bei einer Schalung 14, wobei die Enden nach dem Befüllen mit dem Pultrudat in einfacher (und auch lösbarer) Art und Weise aneinander festgelegt werden können.

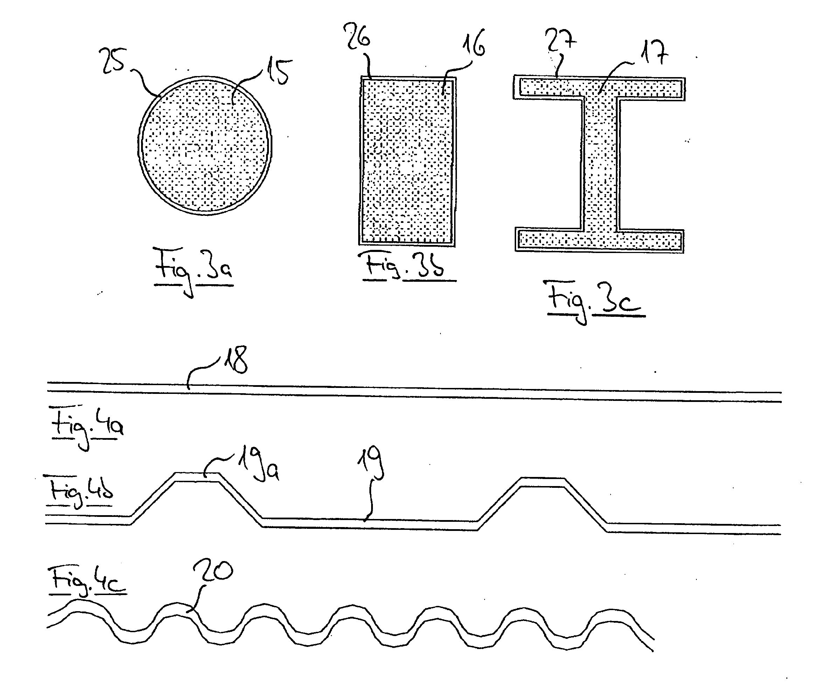

Figur 3a zeigt einen zylindrischen Bewehrungsstab 15 mit kreisförmigen Querschnitten; Figur 3b zeigt einen Bewehrungsstab 16 mit rechteckigen Querschnitten; und Figur 3c zeigt einen alternativen Bewehrungsstab 17 (bzw. ein Bewehrungselement) in Doppel-T-Form. Dort ist auch jeweils die äußere Schalung 25, 26, 27 zu erkennen.

Figur 4 zeigt schließlich verschiedene Oberflächenformen der erfindungsgemäßen Schalung, nämliche eine ebene Außenkontur 18 (siehe Figur 4a), eine mit Rippen 19a versehene Außenkontur 19 (siehe Figur 4b) und eine wellenförmige Außenkontur 20 (siehe Figur 4c).

Insgesamt bietet die vorliegende Erfindung den Vorteil, durch zeitliches und örtliches Trennen der Verfahrensschritte Formgebung und Aushärtung einen schnelleren Produktionsprozess zur Verfügung stellen zu können und außerdem aufgrund der äußerst günstig herstellbaren Kunststoffschalung dies auch noch unter sehr kostengünstigen Bedingungen.

## Patentansprüche

1. Bewehrungsstab für den Betonbau, bestehend aus einem faserverstärkten Kunststoffprofil, das durch Pultrusion hergestellt ist,
wobei
das Kunststoffprofil (15, 16, 17) unter Verwendung einer verlorenen Schalung (11, 12, 13, 14, 18, 19, 20, 25, 26, 27) hergestellt ist, die während des Pultrusionsverfahrens als formgebendes Werkzeug dient und auch nach dem Pultrusionsverfahren am Kunststoffprofil (15, 16, 17) verbleibt, **dadurch gekennzeichnet, dass** die verlorene Schalung aus Kunststoff besteht.

2. Bewehrungsstab nach zumindest Anspruch 1,
**dadurch gekennzeichnet,**
**dass** das Kunststoffprofil mit der Schalung vor dessen Aushärtung gebogen wird.

3. Bewehrungsstab nach zumindest Anspruch 1,
**dadurch gekennzeichnet,**
**dass** die Schalung die radial äußere Oberfläche des Bewehrungsstabs bildet.

4. Bewehrungsstab nach zumindest Anspruch 1,
**dadurch gekennzeichnet,**
**dass** die Schalung (19, 20) profiliert ausgebildet ist.

5. Bewehrungsstab nach zumindest Anspruch 1,
**dadurch gekennzeichnet,**
**dass** die Schalung (12, 13, 14) in Längsrichtung des Kunststoffprofils geteilt ausgebildet ist.

6. Bewehrungsstab nach zumindest Anspruch 5,
**dadurch gekennzeichnet,**
**dass** die Schalung aus zumindest zwei Halbschalen besteht, die aneinander festlegbar sind.

7. Bewehrungsstab nach zumindest Anspruch 1,
**dadurch gekennzeichnet,**
**dass** die Schalung aus diffusionsdichtem Material besteht.

8. Bewehrungsstab nach zumindest Anspruch 1,
**dadurch gekennzeichnet,**
**dass** die Kunststoffschalung aus einem Thermoplast besteht.

9. Bewehrungsstab nach zumindest Anspruch 1,
**dadurch gekennzeichnet,**
**dass** die Fasern Endlosfasern sind.

10. Bewehrungsstab nach zumindest Anspruch 1,
**dadurch gekennzeichnet,**
**dass** der Querschnitt des Bewehrungsstabs zu einem überwiegenden Teil aus dem faserverstärkten Kunststoff und zu einem geringen Anteil aus der Schalung besteht.

11. Pultrusionsverfahren zur Herstellung von einem Bewehrungsstab, bestehend aus einem faserverstärkten Kunststoffprofil,
**dadurch gekennzeichnet,**
**dass** das Kunststoffprofil durch Pultrusion unter Verwendung einer aus Kunststoff bestehenden, formgebenden verlorenen am Kunststoffprofil verbleibenden Schalung hergestellt wird.

12. Pultrusionsverfahren nach zumindest Anspruch 11,
**dadurch gekennzeichnet,**
**dass** die Schalung durch Extrusion hergestellt wird.

13. Pultrusionsverfahren nach zumindest Anspruch 11,
**dadurch gekennzeichnet,**
**dass** keine axiale Relativbewegung zwischen Schalung und Kunststoffprofil stattfindet.

14. Pultrusionsverfahren nach zumindest Anspruch 11,
**dadurch gekennzeichnet,**
**dass** das Kunststoffprofil zusammen mit der Schalung zum Aushärten in einen Ofen gegeben wird.

15. Pultrusionsverfahren nach zumindest Anspruch 11,
**dadurch gekennzeichnet,**
**dass** die Schalung profiliert ausgebildet ist.

16. Pultrusionsverfahren nach zumindest Anspruch 11,
**dadurch gekennzeichnet,**
**dass** das Pultrusionsverfahren unter Verwendung einer in Längsrichtung des Kunststoffprofils geteilten Schalung erfolgt.

17. Pultrusionsverfahren nach zumindest Anspruch 11,
**dadurch gekennzeichnet,**
**dass** das Kunststoffprofil mit der Schalung vor dessen Aushärten gebogen wird.

## Claims

1. Reinforcing bar for concrete construction, consisting of a fibre-reinforced plastics profile which has been produced by pultrusion,
wherein the plastics profile (15, 16, 17) has been produced using a stay-in-place shell (11, 12, 13, 14, 18, 19, 20, 25, 26, 27) which serves as shaping tool during the pultrusion process and remains on the plastics profile (15, 16, 17) also after the pultrusion process, **characterised in that** the stay-in-place shell consists of plastics material.

2. Reinforcing bar according to at least claim 1,
**characterised in that**
the plastics profile with the shell is bent prior to the hardening thereof.

3. Reinforcing bar according to at least claim 1,
**characterised in that**
the shell forms the radially outer surface of the reinforcing bar.

4. Reinforcing bar according to at least claim 1,
**characterised in that**
the shell (19, 20) is of profiled construction.

5. Reinforcing bar according to at least claim 1,
**characterised in that**
the shell (12, 13, 14) is divided in the longitudinal direction of the plastics profile.

6. Reinforcing bar according to at least claim 5,
**characterised in that**
the shell consists of at least two half-shells which are fixable to one another.

7. Reinforcing bar according to at least claim 1,
**characterised in that**
the shell consists of diffusion-tight material.

8. Reinforcing bar according to at least claim 1,
**characterised in that**
the plastics shell consists of a thermoplastic material.

9. Reinforcing bar according to at least claim 1,
**characterised in that**
the fibres are endless fibres.

10. Reinforcing bar according to at least claim 1,
**characterised in that**
the cross-section of the reinforcing bar consists to a predominant extent of the fibre-reinforced plastics material and to a small extent of the shell.

11. Pultrusion process for the production of a reinforcing bar, consisting of a fibre-reinforced plastics profile,
**characterised in that**
the plastics profile is produced by pultrusion using a stay-in-place shaping shell which consists of plastics material and remains on the plastics profile.

12. Pultrusion process according to at least claim 11,
**characterised in that**
the shell is produced by extrusion.

13. Pultrusion process according to at least claim 11,
**characterised in that**
no axial relative movement between the shell and the plastics profile takes place.

14. Pultrusion process according to at least claim 11,
**characterised in that**
the plastics profile together with the shell is placed in an oven for hardening.

15. Pultrusion process according to at least claim 11,
**characterised in that**
the shell is of profiled construction.

16. Pultrusion process according to at least claim 11,
**characterised in that**
the pultrusion process is carried out using a shell that is divided in the longitudinal direction of the plastics profile.

17. Pultrusion process according to at least claim 11,
**characterised in that**
the plastics profile with the shell is bent prior to the hardening thereof.

## Revendications

1. Barre d'armature pour la construction en béton, constituée d'un profilé en matière plastique renforcée de fibres qui est fabriqué par pultrusion,
le profilé en matière plastique (15, 16, 17) étant fabriqué en utilisant un coffrage perdu (11, 12, 13, 14, 18, 19, 20, 25, 26, 27) qui sert d'outil de mise en forme pendant le procédé de pultrusion et qui reste sur le profilé en matière plastique (15, 16, 17) même après le procédé de pultrusion,
**caractérisée en ce**
**que** le coffrage perdu est constitué de matière plastique.

2. Barre d'armature selon au moins la revendication 1,
**caractérisée en ce**
**que** le profilé en matière plastique avec le coffrage est plié avant son durcissement.

3. Barre d'armature selon au moins la revendication 1,
**caractérisée en ce**
**que** le coffrage forme la surface radialement extérieure de la barre d'armature.

4. Barre d'armature selon au moins la revendication 1,
**caractérisée en ce**
**que** le coffrage (19, 20) est réalisé profilé.

5. Barre d'armature selon au moins la revendication 1,
**caractérisée en ce**
**que** le coffrage (12, 13, 14) est réalisé divisé dans la direction longitudinale du profilé en matière plastique.

6. Barre d'armature selon au moins la revendication 5,
**caractérisée en ce**
**que** le coffrage est composé d'au moins deux demi-coffrages qui peuvent être fixés l'un à l'autre.

7. Barre d'armature selon au moins la revendication 1,
**caractérisée en ce**
**que** le coffrage est constitué d'un matériau étanche à la diffusion.

8. Barre d'armature selon au moins la revendication 1,
**caractérisée en ce**
**que** le coffrage en matière plastique est constitué d'un thermoplastique.

9. Barre d'armature selon au moins la revendication 1,
**caractérisée en ce**
**que** les fibres sont des fibres sans fin.

10. Barre d'armature selon au moins la revendication 1,
**caractérisée en ce**
**que** la section transversale de la barre d'armature est constituée en majeure partie de la matière plastique renforcée de fibres et pour une faible part du coffrage.

11. Procédé de pultrusion pour fabriquer une barre d'armature constituée d'un profilé en matière plastique renforcé de fibres,
**caractérisé en ce**
**que** le profilé en matière plastique est fabriqué par pultrusion en utilisant un coffrage perdu de mise en forme constitué de matière plastique qui reste sur le profilé en matière plastique.

12. Procédé de pultrusion selon au moins la revendication 11,
**caractérisé en ce**
**que** le coffrage est fabriqué par extrusion.

13. Procédé de pultrusion selon au moins la revendication 11,
**caractérisé en ce**
**qu'**aucun mouvement relatif axial n'a lieu entre le coffrage et le profilé en matière plastique.

14. Procédé de pultrusion selon au moins la revendication 11,
**caractérisé en ce**
**que** le profilé en matière plastique est placé avec le coffrage dans un four pour le durcissement.

15. Procédé de pultrusion selon au moins la revendication 11,
**caractérisé en ce**
**que** le coffrage est réalisé profilé.

16. Procédé de pultrusion selon au moins la revendication 11,
**caractérisé en ce**
**que** le procédé de pultrusion est effectué en utilisant un coffrage divisé dans la direction longitudinale du profilé en matière plastique.

17. Procédé de pultrusion selon au moins la revendication 11,
**caractérisé en ce**
**que** le profilé en matière plastique avec le coffrage est plié avant son durcissement.
